# EUROPEAN PATENT APPLICATION

(11) **EP 2 562 066 A1**
(43) Date of publication of application: **27.02.2013**
(21) Application number: 10850258.4
(22) Date of filing: 23.04.2010
(51) Int. Cl.: B62D 25/10, B62D 25/12

(54) **HOOD STRUCTURE**

(71) Applicant: TOYOTA JIDOSHA KABUSHIKI KAISHA, Toyota-shi, Aichi-ken, 471-8571 (JP)
(72) Inventor: NAKANO, Shirou, Toyota-shi Aichi 471-8571 (JP)
(74) Representative: Winter, Brandl, Fürniss, Hübner, Röss, Kaiser, Polte - Partnerschaft
(86) International application number: PCT/JP2010/057276
(87) International publication number: WO 2011/132317

(57) **Abstract**

To obtain a hood structure which, in a case where an impact has been inputted to the front end of a hood, can absorb the impact energy with a stable load.

A hood structure (10) is equipped with an outer panel (18) that forms an outside of a hood (12), an inner panel (20) that is joined to the outer panel (18) and forms an inside of the hood (12), a striker (14) that is disposed at a front portion of the inner panel (20) and is locked by a lock mechanism (16), and a reinforcing portion (28) that is disposed at front of the striker (14) in the inner panel (20). The reinforcing portion (28) is configured by a plurality of beads (30) formed by causing the inner panel (20) to partially project being arranged in a vehicle width direction and a vehicle front-rear direction.

## Description

### Technical Field

The present invention relates to a hood structure that closes an open portion in a vehicle body front portion.

### Background Art

There is known a vehicular hood structure in which a reinforcement member is disposed standing up from a position where a striker attaches to an inner panel of a hood to an outer panel (e.g., see JP-A No. 2007-290623). Further, there is also known a vehicular front hood in which a reinforcement is placed on a front end portion of a hood and a rear site of the reinforcement serves as a bending center of the hood (e.g., see JP-A No. 2004-122973). Moreover, there is also known a hood panel in which corrugated beads that are long in a vehicle front-rear direction and are divided by open portions formed in a front-rear direction center portion of an inner panel are disposed in the inner panel and in which beads that overlap the open portions in the corrugated beads in a width direction are disposed (e.g., see JP-A No. 2006-315556).

### Disclosure of the Invention

### Problems to be Solved by the Invention

Incidentally, in a deformation mode in which the front end portion of the hood bends, the generated load that accompanies energy absorption is dependent on the strength of the inner panel. Additionally, it is difficult to perform energy absorption with a stable load simply by disposing a reinforcement member or forming a bead on the front end of the inner panel.

It is an object of the present invention to obtain a hood structure which, in a case where an impact has been inputted to the front end of a hood, can absorb the impact energy with a stable load.

### Means for Solving the Problems

A hood structure pertaining to a first aspect of the present invention includes: an outer panel that configures an outside portion of a hood that covers an upward-facing open portion disposed at a front portion of a vehicle body; an inner panel that is joined to the outer panel at a lower side of the outer panel and that configures an inside portion of the hood; a locked portion that is disposed at a front portion of the inner panel in a vehicle front-rear direction and that is locked by a lock portion at the vehicle body side; and a reinforcing portion that is configured by lining up a plurality of convex portions formed by causing the inner panel to project upward or downward, in a vehicle width direction and in the vehicle front-rear direction, at a portion of the inner panel positioned at the front side of the locked portion in the vehicle front-rear direction.

According to the above-described aspect, when an impactor impacts the hood in front of the locked portion serving as a restraining portion that restrains the hood to the vehicle body, the hood deforms in such a way that its portion on the front side of the locked portion bends downward. At this time, a similar reinforcing effect as the reinforcing effect obtained by increasing the plate thickness is obtained by the reinforcing portion comprising the plurality of convex portions lined up in the vehicle width direction and the vehicle front-rear direction. That is, bending strength improves. For this reason, the inner panel generates a desired load in accompaniment with the deformation. Further, because the plurality of convex portions are dispersed in the vehicle front-rear direction, the occurrence of local bending of the inner panel at particular sites in the vehicle front-rear direction is suppressed. Because of this, a rapid decrease in the load is prevented or effectively suppressed.

In this way, in the hood structure pertaining to the above-described aspect, in a case where an impact has been inputted to the front portion of the hood, the impact energy can be absorbed with a stable load. Further, because the reinforcing portion comprises the convex portions formed in the inner panel, an increase in the mass of the hood is prevented or effectively suppressed.

In the above aspect, a configuration may be provided, wherein the reinforcing portion has a plurality of rows, each of which comprises a plurality of the convex portions lined up in the vehicle front-rear direction; adjacent of the convex portions to each other in the vehicle front-rear direction in each row are arranged so as both to be overlapped, in the vehicle front-rear direction as seen from the vehicle width direction, by the convex portions in other rows; and positions of rear ends, in the vehicle front-rear direction, of the convex portions in rows adjacent to each other in the vehicle width direction are unaligned in the vehicle front-rear direction.

According to the above-described aspect, the convex portions in rows adjacent to each other in the vehicle width direction overlap, in the vehicle front-rear direction as seen in a side view, both of the two convex portions adjacent to each other to the front-rear in each row. Further, the positions of the vehicle rear ends of the convex portions in rows adjacent to each other in the vehicle width direction are unaligned in the vehicle front-rear direction. Because of this, in the reinforcing portion, the convex portions become positioned in each cross section along the vehicle width direction (each cross section whose position in the vehicle front-rear direction differs). In other words, in the reinforcing portion, in each cross section along the vehicle width direction, there is no flat portion, and a similar reinforcing effect as the reinforcing effect obtained by increasing the plate thickness described above is obtained. Consequently, local bending of the inner panel at particular sites in the vehicle front-rear direction is even more effectively suppressed.

In the above aspect, a configuration may be provided, wherein the convex portions comprise beads that are long in the vehicle front-rear direction; and the reinforcing portion is configured by the beads that configure adjacent rows being arranged so as to be unaligned in the vehicle front-rear direction.

According to the above-described aspect, there is realized a configuration where, as a result of beads that are long in the vehicle front-rear direction being arranged in a staggered manner, the beads in another row overlap both of the two beads to the front-rear in one row adjacent thereto.

In the above aspect, a configuration may be provided, wherein the convex portions comprise beads that are long in a direction inclined with respect to the vehicle front-rear direction; and the reinforcing portion is configured by the beads that configure adjacent rows being arranged so as to be unaligned in the vehicle front-rear direction.

According to the above-described aspect, there is realized a configuration where, as a result of beads that are long in directions inclined with respect to the vehicle front-rear direction being arranged in a staggered manner, the beads in another row overlap both of the two beads front and rear in one row adjacent thereto.

In the above aspect, a configuration may be provided, wherein the reinforcing portion is configured by the direction of inclination of the beads with respect to the vehicle front-rear direction being inverted in adjacent rows and the beads in adjacent rows being arranged so as to overlap each other in the vehicle width direction as seen from the vehicle front-rear direction.

According to the above-described aspect, the beads in rows adjacent to each other overlap in both the vehicle front-rear direction and the vehicle width direction, so the inclined beads can be arranged in a high density. Because of this, an excellent effect of reinforcement of the inner panel by the reinforcing portion is obtained.

In the above aspect, a configuration may be provided, wherein the reinforcing portion is placed at a center portion of the inner panel in the vehicle width direction.

According to the above-described aspect, the bending strength of the inner panel can be effectively improved in the area around the locked portion restrained to the vehicle body.

### Effects of the Invention

As described above, the hood structure pertaining to the present invention has the excellent effect that, in a case where an impact has been inputted to the front end of a hood, the impact energy can be absorbed with a stable load.

### Brief Description of the Drawings

FIG. 1 is an enlarged plan view showing main portions of an inner panel configuring a hood structure pertaining to a first embodiment of the present invention;
FIG. 2 is a partially cutaway plan view showing the inner panel configuring the hood structure pertaining to the first embodiment of the present invention;
FIG. 3 is a cross-sectional view taken along line 3-3 of FIG. 4 and shows a front portion of a hood to which the hood structure pertaining to the first embodiment of the present invention is applied;
FIG. 4 is a perspective view showing a vehicle to which the hood structure pertaining to the first embodiment of the present invention is applied;
FIG. 5 is a stroke-load diagram resulting from hood structures pertaining to the embodiments of the present invention and a comparative example;
FIG. 6 is an enlarged plan view showing main portions of an inner panel configuring a hood structure pertaining to a second embodiment of the present invention; and
FIG. 7 is an enlarged plan view showing main portions of an inner panel configuring a hood structure pertaining to a third embodiment of the present invention.

### Best Mode for Implementing the Invention

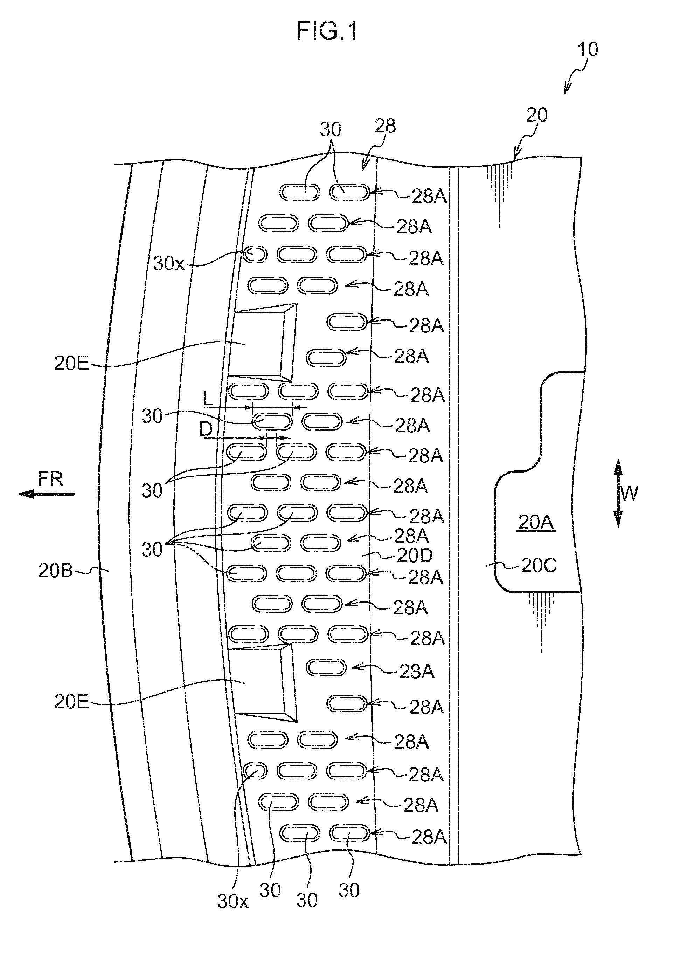

A hood structure 10 pertaining to a first embodiment of the present invention will be described on the basis of FIG. 1 to FIG. 5. Arrow FR appropriately shown in the drawings represents a front direction in a vehicle front-rear direction, arrow UP represents an up direction in a vehicle up-down direction, and arrow W represents a vehicle width direction.

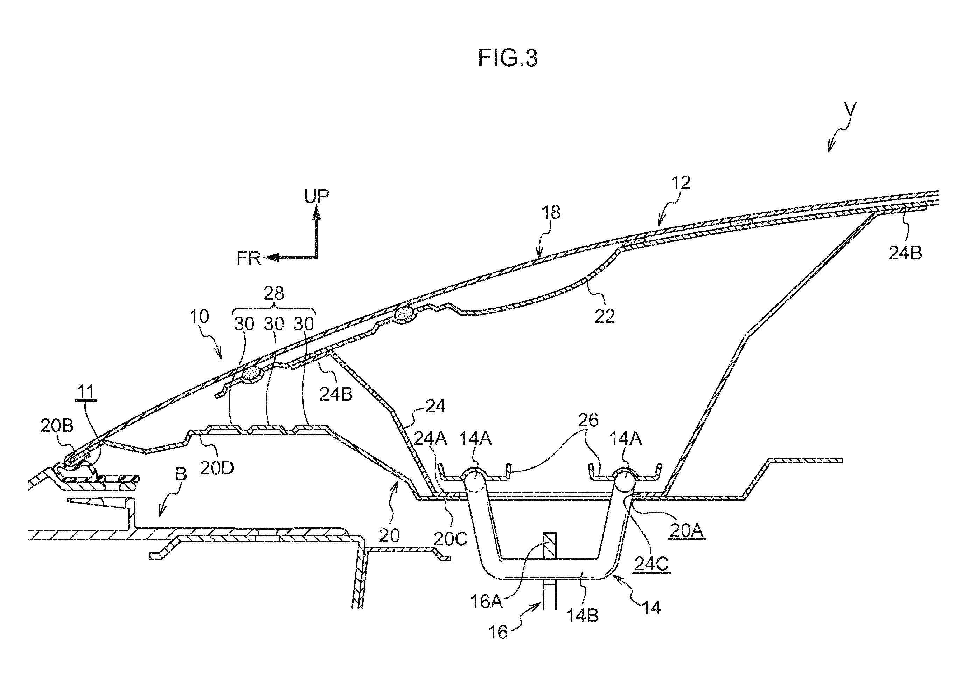

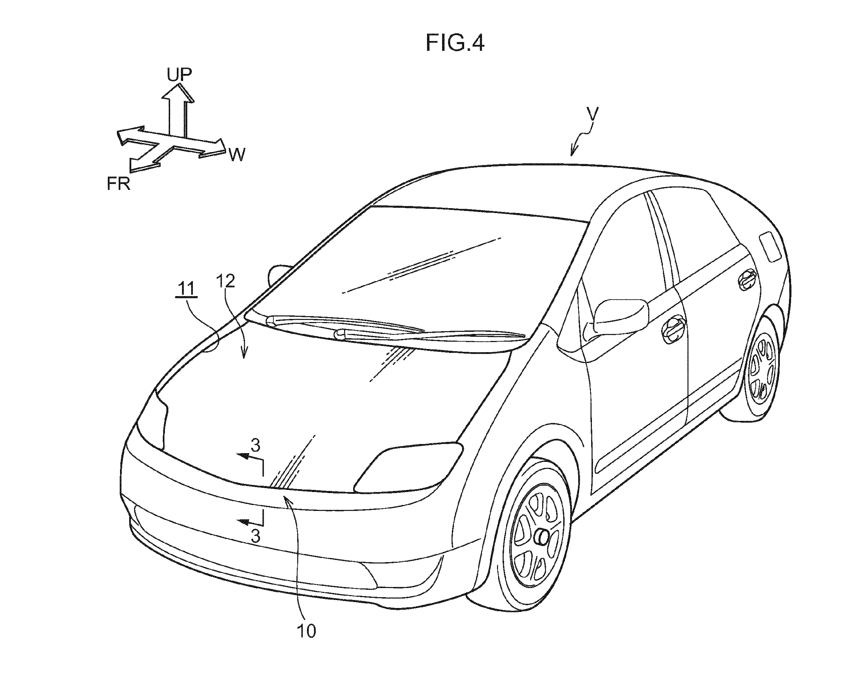

In FIG. 4, a front portion of a vehicle V to which the hood structure 10 is applied is shown in a perspective view. As shown in this figure, the vehicle V is equipped with a hood 12 that closes from above an engine compartment 11 serving as an open portion that opens upward. The hood structure 10 is applied to the hood 12. As shown in FIG. 3, which is a cross-sectional view taken along line 3-3 of FIG. 4, the hood 12 has a striker 14 serving as a locked portion disposed at the neighborhood of the front end of the hood 12.

The hood 12 is held in a state in which the hood 12 closes the engine compartment 11 by the striker 14 being engaged with a latch 16A of a lock mechanism 16 serving as a lock portion on a vehicle body B side. When opening the engine compartment 11, the striker 14 is disengaged from the latch 16A by an unillustrated release mechanism.

In the hood structure 10, the hood 12 is configured as main portions thereof an outer panel 18 and an inner panel 20. As shown in FIG. 3, at the front portion of the hood 12 where the striker 14 is placed, a dent reinforcement 22 is joined to the inner surface side of the outer panel 18. Further, a lock reinforcement 24 with a substantially U-shaped cross section that opens upward as seen in a side sectional view is disposed between the dent reinforcement 22 and the inner panel 20. A bottom portion 24A of the lock reinforcement 24 is joined to the inner panel 20, and flanges 24B on the open end side of the lock reinforcement 24 are joined to the dent reinforcement 22.

The striker 14 is inserted through a lock hole 20A in the inner panel 20 and a lock hole 24C in the bottom portion 24A of the lock reinforcement 24 and is fixed to the inner panel 20 inside the hood 12. Specifically, upper end portions 14A of the striker 14 are fixedly attached, by welding or the like, to rectangular annular support plates 26. The support plates 26 are fixed, by spot welding or the like, to the lock reinforcement 24 and the inner panel 20 on both sides of the lock holes 20A and 24C in the vehicle width direction. An engaging portion 14B of the striker 14 that engages with the latch 16A projects below the inner panel 20 through the lock holes 20A and 20C.

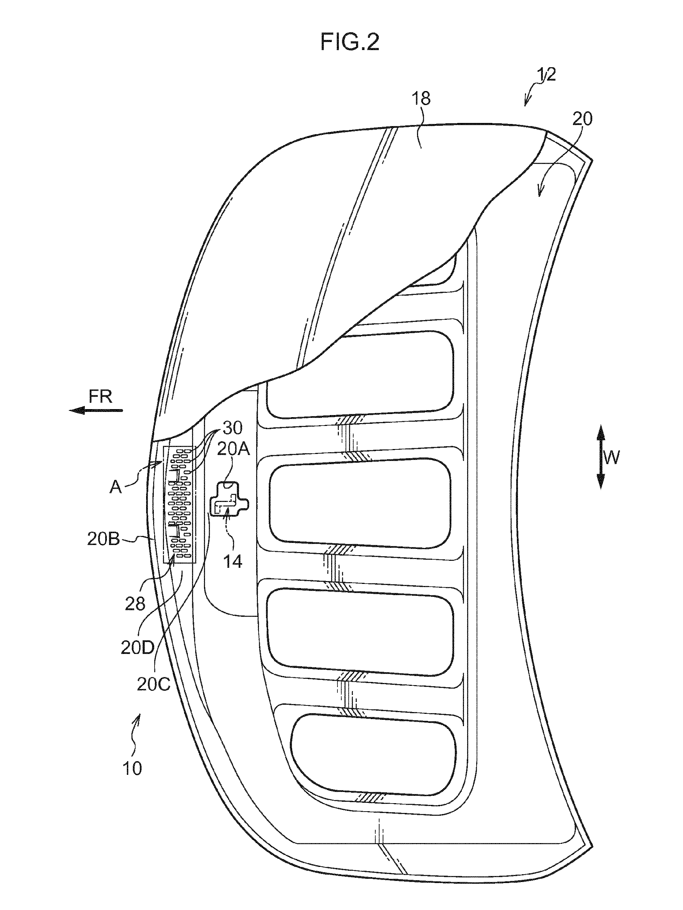

Additionally, a reinforcing portion 28 is disposed at front of the striker 14 in the inner panel 20. More specifically, as shown in FIG. 2, the reinforcing portion 28 is disposed at an area A in front of the striker 14 in the inner panel 20 and on a center side in the vehicle width direction. The area A is set, in such a way as to be substantially symmetrical with respect to a centerline in the vehicle width direction, in at least part of the space between left and right headlights in the inner panel 20. In this embodiment, the area A is set within a center range of three ranges obtained by dividing the front portion of the inner panel 20 equally into thirds in the vehicle width direction. Further, in this embodiment, the portion of the inner panel 20 including the area A in which the reinforcing portion 28 is disposed serves as a joint portion 20B resulting from hemming with the outer panel 18 and a shelf portion 20D that projects (is raised) upward between the joint portion 20B and a front edge portion 20C of the lock hole 20A.

As shown in FIG. 1, the reinforcing portion 28 is configured by a plurality of beads 30 serving as a plurality of convex portions being arranged in the vehicle width direction and the vehicle front-rear direction. The beads 30 in this embodiment are configured by causing the shelf portion 20D to partially project upward. That is, the beads 30 can also be taken as concave portions that open downward. For this reason, the inner panel 20 is given a configuration where water or the like does not accumulate inside the beads 30.

Further, in this embodiment, the beads 30 are formed long in the vehicle front-rear direction. Further, excluding some of the beads 30 (see beads 30X shown in FIG. 1), lengths L of the beads 30 are substantially the same. Moreover, the widths of the beads 30 are substantially the same.

The reinforcing portion 28 is configured by lining up a plurality of bead rows 28A, in each of which a plurality of the beads 30 are lined up in the vehicle front-rear direction, in the vehicle width direction. In this embodiment, joint seats 20E for joining unillustrated reinforcement members to the shelf portion 20D are formed in the shelf portion 20D, and at the sites where the joint seats 20E are formed, the bead rows 28A have a single bead 30.

Additionally, the beads 30 are arranged in a staggered manner by the positions of the beads 30 in the front-rear direction being unaligned in the bead rows 28A adjacent to each other in the vehicle width direction. More specifically, bead intervals D in the bead rows 28A are set shorter than the lengths L of the beads 30, and the beads 30 in the bead rows 28A adjacent to each other in the vehicle width direction overlap, as seen in a side view, both of the two beads 30 adjacent to each other to the front-rear. Further, because the lengths L of the beads are the same, the positions of front-rear ends of the beads 30 differ between the bead rows 28A adjacent to each other in the vehicle width direction.

According to the above, in the hood structure 10, in each cross section of the reinforcing portion 28 along the vehicle width direction, there is formed a convexo-concave shape (a corrugated shape) in which sites where the beads 30 are formed and sites where the beads 30 are not formed are alternately arranged in the vehicle width direction. Further, in this embodiment, in the reinforcing portion 28, excluding the sites where the joint seats 20E are formed and later-described vehicle width direction end portions, the numbers of the beads configuring the bead rows 28A adjacent to each other in the vehicle width direction differ. Specifically, bead rows 28A comprising three of the beads 30 and bead rows 28A comprising two of the beads 30 are alternately arranged in the vehicle width direction.

As shown in FIG. 1, the front edge of the shelf portion 20D forms an arc whose center portion in the vehicle width direction is positioned furthest in front, and the rear edge of the shelf portion 20D forms a straight line substantially along the vehicle width direction (an arc whose radius of curvature is larger than that of the front edge). For this reason, both ends of the shelf portion 20D in the vehicle width direction are shorter in the vehicle front-rear direction than the center. For this reason, on both end sides of the reinforcing portion 28 in the vehicle width direction, beads 30X that are shorter than the other beads 30 are placed and bead rows 28A comprising two of the beads 30 are placed adjacent to each other in the vehicle width direction.

Next, the operation of the present embodiment will be described.

In the hood structure 10 with the above-described configuration, the hood 12 is held in a position in which the hood 12 closes the engine compartment 11 in a state where the latch 16A of the lock mechanism 16 is engaged with the engaging portion 14B of the striker 14. When an impactor impacts the front end of the hood 12 from this state, the hood 12 is deformed is such a way that its portion on the front side of the striker 14, which is the site that restrains the hood 12 to the vehicle body B, bends downward.

Here, because the reinforcing portion 28 is disposed at the inner panel 20 of the hood 12, the strength of the inner panel 20 with respect to the above-described bending deformation is high and the inner panel 20 generates a load (counter to deformation) in accompaniment with the deformation. That is, a similar reinforcing effect as the reinforcing effect obtained by increasing the plate thickness of the shelf portion 20D is obtained by the reinforcing portion 38 comprising the plurality of beads 30, and the bending strength of the front end of the inner panel 20 improves. Because of this, the impact energy that accompanies an impact is excellently absorbed.

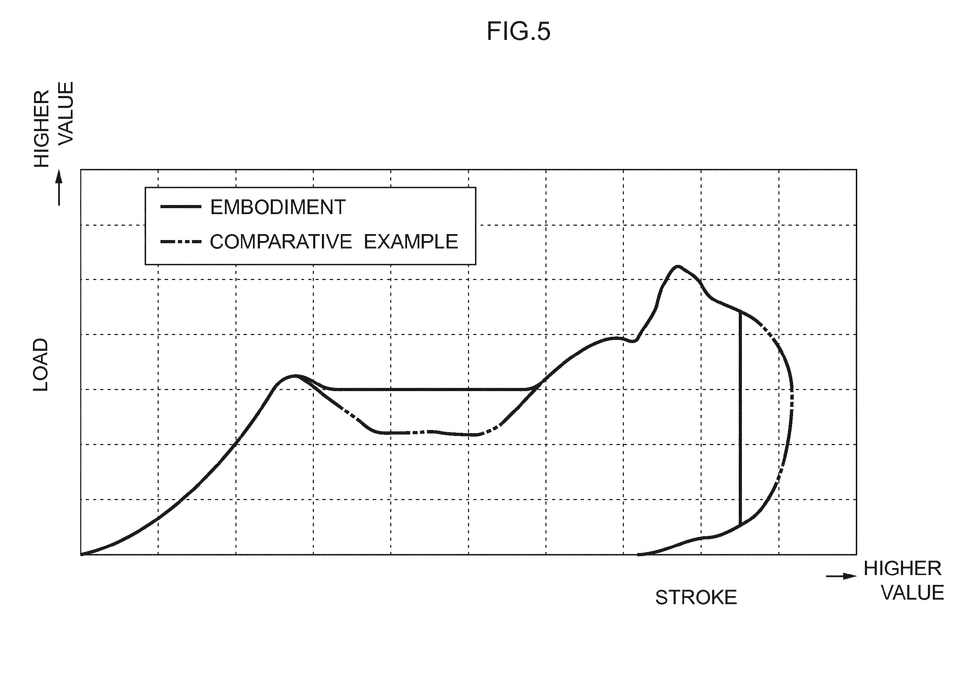

For example, in a first comparative example (not illustrated) in which the reinforcing portion 28 is not formed, in a pedestrian protection upper leg impact test, deformation progresses while the bending point in the front end portion of the inner panel 20 transitions to the vehicle rear side. Then, when the deformation reaches a portion whose bending strength is weak, the generated load diminishes. That is, as indicated by the imaginary line in FIG. 5, in this comparative example, a portion whose generated load is low arises. For this reason, the stroke that accompanies energy absorption becomes longer, and there is the concern that the impactor will end up striking a part under the inner panel 20 (bottoming will arise).

Further, in a second comparative example (not illustrated) in which a plurality of beads with lengths extending across the entire length of the reinforcing portion 28 of the inner panel 20 are formed in the vehicle width direction, the generated load is increased by the reinforcing effect of the beads and bending in the bead formation range is prevented. However, in the second comparative example, the generated load rapidly decreases as a result of bending arising in the rear ends of the beads, and there is the concern that bottoming of the impactor will arise.

In contrast to these, the 10 is equipped with the reinforcing portion 28 that is configured by the beads 30 being arranged in a staggered manner, with the positions of their front-rear ends being unaligned, while overlapping front and rear between the bead rows 28A adjacent to each other. For this reason, each cross section, in the vehicle front-rear direction, of the reinforcing portion 28 along the vehicle width direction is given a convexo-concave shape in which sites where the beads 30 are formed and sites where the beads 30 are not formed are alternately arranged in the vehicle width direction. Because of this, the reinforcing portion 28 can obtain, in each portion in the vehicle front-rear direction, a similar reinforcing effect as the reinforcing effect obtained by increasing the plate thickness of the shelf portion 20D. Moreover, because the positions of the rear ends of the beads 30 differ between the bead rows 28A adjacent to each other, the occurrence of local bending in the rear ends of the beads is prevented or effectively suppressed.

According to the above, in the hood structure 10, as indicated by the solid line in FIG. 5, a diminishment of the load midway in the stroke that accompanies energy absorption is suppressed; as a result, the stroke required for energy absorption also becomes shorter compared to the first comparative example. Consequently, in the hood structure 10, an impactor is prevented or effectively suppressed from ending up striking a part under the inner panel 20 (bottoming).

In this way, in the hood structure 10 pertaining to the first embodiment, in a case where an impact has been inputted to the front end of the hood 12, the impact energy can be absorbed with a stable load. Further, because the reinforcing portion 28 is configured as a complex of the beads 30 formed in the inner panel 20, the bending strength of the front end of the hood 12 improves without being accompanied by an increase in the mass of the hood 12. Moreover, depending on the width, height (depth), pitch, and so forth of the beads 30, a generated load that meets the need can be set (adjusted).

### (Other Embodiments)

Next, other embodiments of the present invention will be described. In regard to parts and sections that are substantially the same as those in the first embodiment or the above-mentioned configurations, the same reference signs as those in the first embodiment or the above-mentioned configurations will be given thereto and description thereof will be omitted.

### (Second Embodiment)

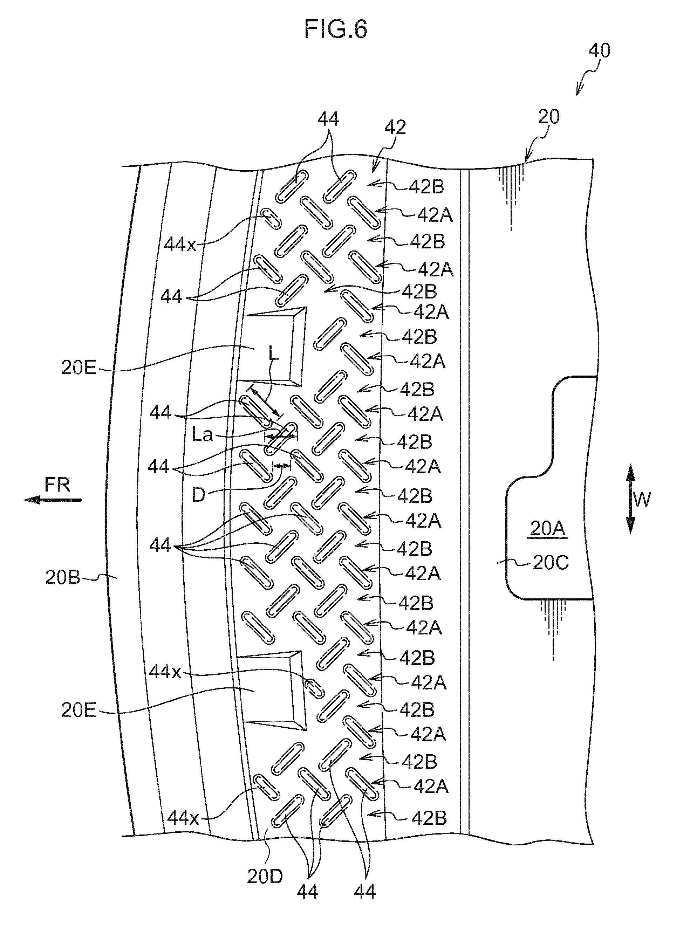

In FIG. 6, a reinforcing portion 42 configuring a hood structure 40 pertaining to a second embodiment of the present invention is shown in an enlarged plan view corresponding to FIG. 1. As shown in this figure, the hood structure 40 differs from the hood structure 10 in that, instead of the beads 30 that are long in the vehicle front-rear direction, the hood structure 40 comprises a plurality of beads 44 that are long in directions inclined with respect to the vehicle front-rear direction. The hood structure 40 will be specifically described below.

The reinforcing portion 42 is configured by a plurality of beads 44 serving as a plurality of convex portions being arranged in the vehicle width direction and the vehicle front-rear direction. The beads 44 in this embodiment are configured by causing the shelf portion 20D to partially project upward. That is, the beads 44 can also be taken as concave portions that open downward. For this reason, the inner panel 20 is given a configuration where water or the like does not accumulate inside the beads 44.

Further, in this embodiment, the beads 44 are formed long in directions inclined with respect to both the vehicle front-rear direction and the vehicle width direction. Further, excluding some of the beads 44 (see beads 44X shown in FIG. 6), lengths L of the beads 44 are substantially the same. Further, the widths of the beads 44 in this embodiment are substantially the same. The widths of the beads 44 are set narrower than the widths of the beads 30.

The reinforcing portion 42 is configured by bead rows 42A and 42B, in each of which a plurality of the beads 44 are lined up in the vehicle front-rear direction, being alternately lined up in the vehicle width direction. At the sites where the joint seats 20E are formed, the bead rows 42A and 42B have a single bead 44.

Additionally, the beads 44 are arranged in a staggered manner by the positions of the beads 44 in the front-rear direction being unaligned in the bead rows 42A and the bead rows 42B adjacent to each other in the vehicle width direction. More specifically, (projected) bead intervals D in the bead rows 42A along the vehicle front-rear direction are set shorter than lengths La of the beads 44 along the both front-rear direction. Additionally, the beads 44 in the bead rows 42B overlap, as seen in a side view, both of the two beads 44 adjacent to each other to the front-rear in the bead rows 42A. Further, because the lengths L (later-described angles of inclination) of the beads 44 are the same, the positions of front-rear ends of the beads 44 differ between the bead rows 42A adjacent to each other in the vehicle width direction.

Moreover, in the hood structure 40, the directions of inclination of the beads 44 are inverted in the bead rows 42A and the bead rows 42B. In this embodiment, the beads 44 in the bead rows 42A and the beads 44 in the bead rows 42B are inclined 45° and -45° with respect to the vehicle front-rear direction and are given an arrangement where their mutual extension lines are orthogonal to each other. Additionally, the distal ends of the beads 44 in the bead rows 42B enter between the beads 44 in the bead rows 42A. That is, the beads 44 in the bead rows 42A and the beads 44 in the bead rows 42B are arranged overlapping in the vehicle width direction as seen from the vehicle front-rear direction.

According to the above, in the hood structure 40, in each cross section of the reinforcing portion 42 along the vehicle width direction, there is formed a convexo-concave shape (a corrugated shape) in which sites where the beads 44 are formed and sites where the beads 44 are not formed are alternately arranged in the vehicle width direction. Further, in this embodiment, in the reinforcing portion 42, excluding the sites where the joint seats 20E are formed and later-described vehicle width direction end portions, the numbers of the beads 44 that are constituent elements differ between the bead rows 42A and the bead rows 42B. Specifically, the bead rows 42A comprise three of the beads 44 and the bead rows 42B comprise two of the beads 44.

Both ends of the shelf portion 20D in the vehicle width direction are shorter in the vehicle front-rear direction than the center. For this reason, on both end sides of the reinforcing portion 42 in the vehicle width direction, beads 44X that are shorter than the other beads 44 are placed. The other configurations of the hood structure 40 are the same as the corresponding configurations of the hood structure 10 including the illustrated portions.

Consequently, fundamentally the same effects can also be obtained with the hood structure 40 pertaining to the second embodiment also, by effects in a similar manner to that of hood structure 10 pertaining to the first embodiment. Further, in the hood structure 40, the directions of inclination of the beads 44 are inverted in the bead rows 42A and the bead rows 42B. For this reason, there is realized a high-density arrangement in which the beads 44 in the bead rows 42A and the beads 44 in the bead rows 42B overlap in the vehicle width direction as seen from the vehicle front-rear direction. Because of this, the reinforcing portion 42 of the hood structure 40 can obtain a similar reinforcing effect as that of the reinforcing portion 28 of the hood structure 10 while using the beads 44 whose widths are narrower than those of the beads 30.

### (Third Embodiment)

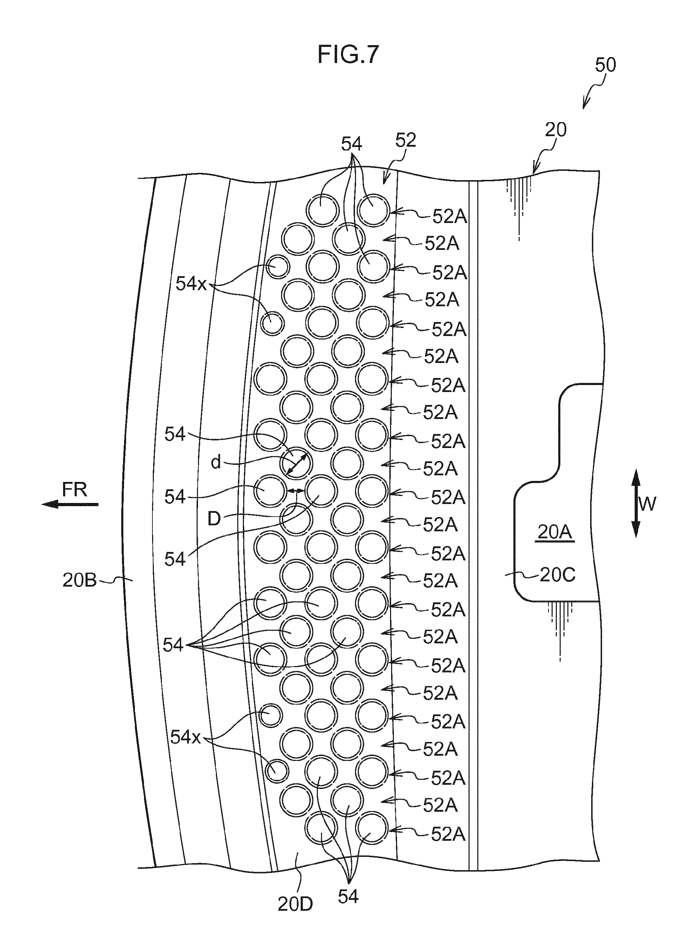

In FIG. 7, a reinforcing portion 52 configuring a hood structure 50 pertaining to a third embodiment of the present invention is shown in an enlarged plan view corresponding to FIG. 1. As shown in this figure, the hood structure 50 differs from the hood structure 10 in that, instead of the beads 30 that are long in the vehicle front-rear direction, the hood structure 50 comprises a plurality of circular convex portions 54. The hood structure 50 will be specifically described below.

The reinforcing portion 52 is configured by a plurality of circular convex portions 54 serving as a plurality of convex portions being arranged in the vehicle width direction and the vehicle front-rear direction. The circular convex portions 54 in this embodiment are configured by causing the shelf portion 20D to partially project upward. That is, the circular convex portions 54 can also be taken as concave portions (dimples) that open downward. For this reason, the inner panel 20 is given a configuration where water or the like does not accumulate inside the circular convex portions 54.

Further, in this embodiment, the circular convex portions 54 are formed in substantially circular shapes as seen in a plan view. Excluding some of the circular convex portions 54 (see circular convex portions 54X shown in FIG. 7), diameters d of the circular convex portions 54 are substantially the same. The reinforcing portion 52 is configured by a plurality of bead rows 52A, in each of which a plurality of the circular convex portions 54 are lined up in the vehicle front-rear direction, being lined up in the vehicle width direction. In this embodiment, an example is described where the joint seats 20E are not disposed. In the third embodiment, the hood structure may also be given a configuration where the joint seats 20E are disposed, and in the first and second embodiments, the hood structures may also be given configurations where the joint seats 20E are not disposed.

Additionally, the circular convex portions 54 are arranged in a staggered manner by the positions of the circular convex portions 54 in the front-rear direction being unaligned in the bead rows 52A adjacent to each other in the vehicle width direction. More specifically, bead intervals D in the bead rows 52A are set shorter than the diameters d of the circular convex portions 54, and the circular convex portions 54 in the bead rows 52A adjacent to each other in the vehicle width direction overlap, as seen in a side view, both of the two circular convex portions 54 adjacent to each other to the front-rear. Further, because the diameters d of the circular convex portions 54 are the same, the positions of front-rear ends of the circular convex portions 54 differ between the bead rows 52A adjacent to each other in the vehicle width direction.

According to the above, in the hood structure 50, in each cross section of the reinforcing portion 52 along the vehicle width direction, there is formed a convexo-concave shape (a corrugated shape) in which sites where the circular convex portions 54 are formed and sites where the circular convex portions 54 are not formed are alternately arranged in the vehicle width direction. Further, in this embodiment, in the reinforcing portion 52, excluding later-described vehicle width direction end portions, the numbers of the circular convex portions 54 configuring the bead rows 52A adjacent to each other in the vehicle width direction differ. Specifically, bead rows 52A comprising three of the circular convex portions 54 and bead rows 52A comprising two of the circular convex portions 54 are alternately arranged in the vehicle width direction.

Both ends of the shelf portion 20D in the vehicle width direction are shorter in the vehicle front-rear direction than the center, so on both end sides of the reinforcing portion 52 in the vehicle width direction, circular convex portions 54X whose diameters are smaller than those of the other circular convex portions 54 are placed and the bead rows 52A comprising two of the circular convex portions 54 are adjacent to each other in the vehicle width direction. The other configurations of the hood structure 50 are the same as the corresponding configurations of the hood structure 10 including the illustrated portions.

Consequently, fundamentally the same effects can also be obtained with the hood structure 50 pertaining to the third embodiment also, by effects in a similar manner to that of hood structure 10 pertaining to the first embodiment.

In each of the embodiments described above, examples have been described where the dimensions of each of the beads 30, the dimensions of each of the beads 44, and the diameters of each of the circular convex portions 54 are basically the same, but the present invention is not limited to this; for example, the reinforcing portion may also be configured by combining beads with several types of dimensional shapes. Further, it goes without saying that convex portions with types of shapes differing from those in the above-described embodiments can also be employed.

Further, in each of the embodiments described above, examples have been described where the reinforcing portions 28, 42, and 52 are disposed at the center portion of the inner panel 20 in the vehicle width direction in front of the striker 14, but the present invention is not limited to this and may also be given a configuration where, for example, the reinforcing portion extends as far as the vehicle width direction end portion sides.

Moreover, in the embodiments described above, examples have been described where the hood 12 closes the engine compartment 11, but the present invention is not limited to this and may also have a configuration where, for example, the hood 12 closes a luggage compartment disposed at the front portion of the vehicle or a space in which a battery or the like is stored instead of an engine (power unit).

## Claims

1. A hood structure comprising:
an outer panel that configures an outside portion of a hood that covers an upward-facing open portion disposed at a front portion of a vehicle body;
an inner panel that is joined to the outer panel at a lower side of the outer panel and that configures an inside portion of the hood;
a locked portion that is disposed at a front portion of the inner panel in a vehicle front-rear direction and that is locked by a lock portion at the vehicle body side; and
a reinforcing portion that is configured by lining up a plurality of convex portions formed by causing the inner panel to project upward or downward, in a vehicle width direction and in the vehicle front-rear direction, at a portion of the inner panel positioned at the front side of the locked portion in the vehicle front-rear direction.

2. The hood structure according to claim 1, wherein:
the reinforcing portion has a plurality of rows, each of which comprises a plurality of the convex portions lined up in the vehicle front-rear direction;
adjacent of the convex portions to each other in the vehicle front-rear direction in each row are arranged so as both to be overlapped, in the vehicle front-rear direction as seen from the vehicle width direction, by the convex portions in other rows; and
positions of rear ends, in the vehicle front-rear direction, of the convex portions in rows adjacent to each other in the vehicle width direction are unaligned in the vehicle front-rear direction.

3. The hood structure according to claim 2, wherein:
the convex portions comprise beads that are long in the vehicle front-rear direction; and
the reinforcing portion is configured by the beads that configure adjacent rows being arranged so as to be unaligned in the vehicle front-rear direction.

4. The hood structure according to claim 2, wherein:
the convex portions comprise beads that are long in a direction inclined with respect to the vehicle front-rear direction; and
the reinforcing portion is configured by the beads that configure adjacent rows being arranged so as to be unaligned in the vehicle front-rear direction.

5. The hood structure according to claim 4, wherein the reinforcing portion is configured by the direction of inclination of the beads with respect to the vehicle front-rear direction being inverted in adjacent rows and the beads in adjacent rows being arranged so as to overlap each other in the vehicle width direction as seen from the vehicle front-rear direction.

6. The hood structure according to any one of claim 1 to claim 5, wherein the reinforcing portion is placed at a center portion of the inner panel in the vehicle width direction.
